# EUROPEAN PATENT APPLICATION

(11) **EP 4 517 590 A1**
(43) Date of publication of application: **05.03.2025**
(21) Application number: 24196443.6
(22) Date of filing: 26.08.2024
(51) Int. Cl.: G06N 3/063, G06N 3/084

(54) **SYSTEMS AND METHODS FOR PROCESSING TASKS VIA A HETEROGENEOUS MEMORY SYSTEM**

(30) Priority: 30.08.2023 US 202363535536 P; 11.10.2023 US 202318378958
(71) Applicant: Samsung Electronics Co., Ltd., Gyeonggi-do, 16677 (KR)
(72) Inventor: INUPAKUTIKA, Devasena, San Jose, CA, 95134 (US); YANG, Qirui, San Jose, CA, 95134 (US); DAVIS, Bridget, San Jose, CA, 95134 (US); CARPENTER, Bradley, San Jose, CA, 95134 (US); LOFTON, Charles, San Jose, CA, 95134 (US)
(74) Representative: Kuhnen & Wacker Patent- und Rechtsanwaltsbüro PartG mbB

(57) **Abstract**

Systems and methods for processing tasks are disclosed. A processing circuit is configured to: identify first data associated with a task associated with a machine learning program; determine a first attribute associated with the first data; provide the first data to a first device based on determining the first attribute; identify second data associated with the task associated with the machine learning program; determine a second attribute associated with the second data; and provide the second data to a second device different from the first device, wherein the machine learning program is configured to generate a result based on an input.

## Description

### FIELD

One or more aspects of embodiments according to the present disclosure relate to storage systems, and more particularly to systems and methods for processing one or more tasks using a heterogenous memory system.

### BACKGROUND

The use of artificial intelligence (AI) has increased dramatically over the last few years. AI has become commonly used in domains such as image classification, speech recognition, media analytics, heath care, autonomous machines, smart assistants, and the like. Training an AI model often requires processing and storage of large amounts (e.g., Terabytes) of data.

The above information disclosed in this Background section is only for enhancement of understanding of the background of the present disclosure, and therefore, it may contain information that does not form prior art.

### SUMMARY

One or more embodiments of the present disclosure are directed to a system that includes a first storage medium and a processing circuit in communication with the first storage medium. The processing circuit is configured to: identify first data associated with a task associated with a machine learning program; determine a first attribute associated with the first data; provide the first data to a first device based on determining the first attribute; identify second data associated with the task associated with the machine learning program; determine a second attribute associated with the second data; and provide the second data to a second device different from the first device, wherein the machine learning program is configured to generate a result based on an input.

In some embodiments, the first device includes at least one of a graphics processing unit, tensor processing unit, or co-processor.

In some embodiments, the second device includes a solid state drive.

In some embodiments, the processing circuit is configured to operate using a cache coherent protocol.

In some embodiments, the first data is stored in the first storage medium and includes at least one of an optimizer state, gradient, or weight computed for the machine learning program.

In some embodiments, the second data is stored in the first storage medium and includes at least one of an activation, input batch, or checkpoint data of the machine learning program.

In some embodiments, the first attribute includes a state of a computing logic for training the machine learning program.

In some embodiments, the second attribute includes a data type.

In some embodiments, the first device is configured to perform a computation based on the first data, generate third data based on the computation, and transfer the third data, wherein the processing circuit is configured to: receive the third data; and store the third data in the first storage medium.

In some embodiments, the processing circuit is further configured to: receive a signal indicative of a state of the first device; and update a parameter associated with the task.

In some embodiments, the state of the first device includes available memory of the first device, and the parameter includes a batch size of training data for training the machine learning program.

One or more embodiments of the present disclosure are also directed to a method that includes: identifying first data associated with a task associated with a machine learning program; determining a first attribute associated with the first data; providing the first data to a first device based on determining the first attribute; identifying second data associated with the task associated with the machine learning program; determining a second attribute associated with the second data; and providing the second data to a second device different from the first device, wherein the machine learning program is configured to generate a result based on an input.

These and other features, aspects and advantages of the embodiments of the present disclosure will be more fully understood when considered with respect to the following detailed description, appended claims, and accompanying drawings. Of course, the actual scope of the invention is defined by the appended claims.

### BRIEF DESCRIPTION OF THE DRAWINGS

Non-limiting and non-exhaustive embodiments of the present embodiments are described with reference to the following figures, wherein like reference numerals refer to like parts throughout the various views unless otherwise specified.
FIG. 1 depicts a conceptual layout diagram of a machine learning (ML) model undergoing an Al pipeline workload (e.g., ML training) according to one or more embodiments;
FIG. 2 depicts a block diagram of a computing system for building an ML model based on workloads of an AI pipeline according to one or more embodiments;
FIG. 3 depicts a block diagram of an offload engine according to one or more embodiments;
FIG. 4 depicts a process for moving computation tensors between a host processor and a task processor according to one or more embodiments;
FIG. 5 depicts a flow diagram of a process for moving tensor data by a host processor according to one or more embodiments; and
FIG. 6 depicts a flow diagram of a process for moving tensor data by the task processor according to one or more embodiments.

### DETAILED DESCRIPTION

Hereinafter, example embodiments will be described in more detail with reference to the accompanying drawings, in which like reference numbers refer to like elements throughout. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art. Accordingly, processes, elements, and techniques that are not necessary to those having ordinary skill in the art for a complete understanding of the aspects and features of the present disclosure may not be described. Unless otherwise noted, like reference numerals denote like elements throughout the attached drawings and the written description, and thus, descriptions thereof may not be repeated. Further, in the drawings, the relative sizes of elements, layers, and regions may be exaggerated and/or simplified for clarity.

Embodiments of the present disclosure are described below with reference to block diagrams and flow diagrams. Thus, it should be understood that each block of the block diagrams and flow diagrams may be implemented in the form of a computer program product, an entirely hardware embodiment, a combination of hardware and computer program products, and/or apparatus, systems, computing devices, computing entities, and/or the like carrying out instructions, operations, steps, and similar words used interchangeably (for example the executable instructions, instructions for execution, program code, and/or the like) on a computer-readable storage medium for execution. For example, retrieval, loading, and execution of code may be performed sequentially such that one instruction is retrieved, loaded, and executed at a time. In some example embodiments, retrieval, loading, and/or execution may be performed in parallel such that multiple instructions are retrieved, loaded, and/or executed together. Thus, such embodiments can produce specifically-configured machines performing the steps or operations specified in the block diagrams and flow diagrams. Accordingly, the block diagrams and flow diagrams support various combinations of embodiments for performing the specified instructions, operations, or steps.

The process of building a machine learning model (ML) (also referred to as a machine learning program) may be long and complex. An AI pipeline may identify a series of tasks or workloads that may need to be completed for building the ML model. For example, training data may need to be gathered, data may need to be preprocessed, features may need to be extracted from the data, and the model may need to trained and validated using the extracted features. One or more operations to complete a task or workload of the AI pipeline may be executed in series and/or parallel, by one or more task processors.

One or more of the AI pipeline tasks, such as training, may be very compute-intensive and data-intensive due to the large amount of data and the sources of data generally involved in the task. For example, an ML model may include billions of model parameters including weights, activation functions, and gradient functions. One or more of the model parameters may need to be updated during an iteration of the model training (e.g., via backpropagation). The number of iterations to update the model parameters may depend on the batch size of the examples considered by the model to do the training, per iteration.

In general terms, embodiments of the present disclosure are directed to systems and methods for processing a task in an AI pipeline using a heterogenous memory system. Although the various embodiments are described using ML training as the task, a person of skill in the art should recognize that the embodiments may extend to other tasks in the AI pipeline. The heterogenous memory system may help address memory wall issues that may arise with the training of large ML models, while containing cost.

Although rapid advances are being made to memory and processing unit performance, the underlying memory technology may still be unable to keep up with the growth of the models (referred to as a "memory wall"). For example, a single graphics processing unit (GPU) may be insufficient to fit the parameters needed for model training, even with the advances in GPU technology. The computing and storage capacity of the GPU may thus put limits on the batch size used to do the training. The smaller the batch size, the longer it may take to train the model. Although multiple GPUs may be used to address the memory wall issue, there may be a limit of the total number of GPUs that may be installed. In addition, the use of additional GPUs may increase the overall cost of the AI system.

The use of a heterogenous memory system during ML training may provide a large working memory (e.g., an aggregated memory space) that may allow selective transfer of data among the memory devices in the heterogenous memory system to help address, for example, the memory wall issue. In some embodiments, a host processor gathers information of the devices available in the heterogeneous memory system. The available devices may include one or more GPUs, host memory, storage devices (e.g., solid state drives (SSDs)), and/or the like. During the ML training, the host processor may selectively transfer portions of the model data to a task processor (e.g., a GPU) or to a storage device (e.g., SSD), depending on one or more attributes of the model data. For example, the host CPU my maintain, in its memory, certain types of model data (e.g., model weights, gradients, optimizer states of the optimizer algorithm) that are not involved in a current computation by the task processor. Other types of model data (e.g., activations, input batches, checkpoints, and/or the like) that are infrequently used for the ML training may be offloaded to the SSD. As one or more computations are performed for executing the task, the host processor may identify data needed for the computation, and if the data is stored in the host memory, transfer the data to the task processor for performing the computation. For example, the data may be transferred along with the command to perform the computation. Similarly, data that is deemed inactive for performing ML training may be offloaded from the task processor to the host processor.

The offloading of the model data from the task processor may free up the task processor to handle additional workload operations and/or data associated with the operations. For example, for an ML training task, the task processor may be able to handle a bigger batch size for training the ML model. The increased batch size may allow acceleration of the training time and throughput improvement, helping to accelerate the AI pipeline.

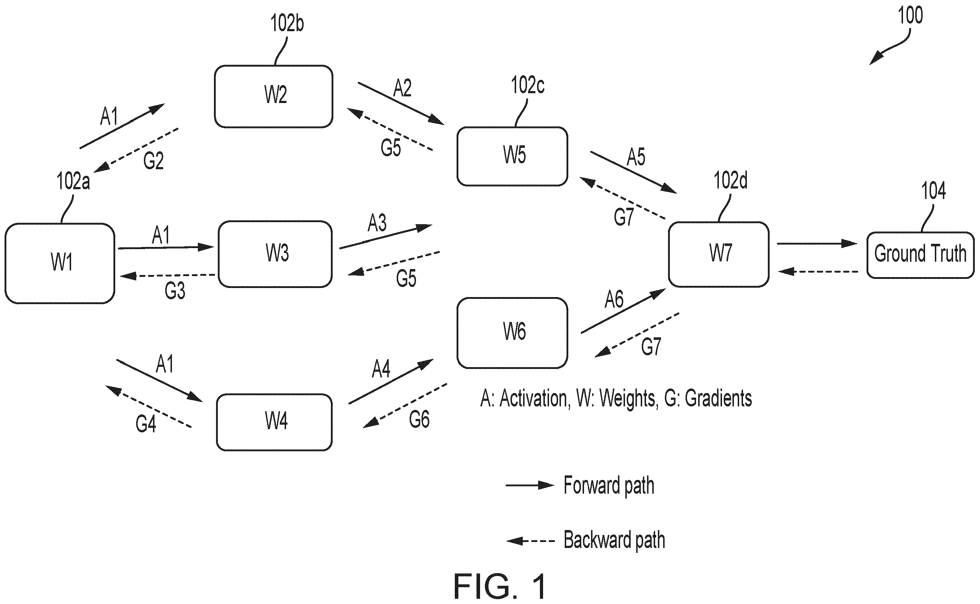

FIG. 1 depicts a conceptual layout diagram of a machine learning (ML) model 100 (e.g., a deep neural network) undergoing an AI pipeline workload (e.g., ML training) according to one or more embodiments. The ML model may also be referred to as an ML program. The ML model 100 may include one or more nodes 102a-102d (collectively referenced as 102) associated with one or more model parameters. The model parameters may include weights, activation functions (referred to as activations), gradients, and/or the like. During a forward pass of the training process, activation of the nodes 102 may be computed based on input training data, the weights, and the activation functions. In some embodiments, the input training data includes one or more training samples or examples. The number of training examples may be defined by an input batch size which may depend, for example, on the computing resources available to the task processor preforming the computations. The dataset of training samples used for training the ML model may be divided into one or more batches of the given batch size. In some embodiments, the samples in an input batch are fed to the ML model for making predictions in the forward pass, before updating one or more model parameters.

In some embodiments, the one or more model parameters are updated during a backward pass (e.g., backward propagation) of the training process. An example parameter that is updated may be the weights of the nodes 102. In this regard, a loss may be computed for the input training data via a loss function that compares a predicted output of the ML model 100 against an expected output (e.g., ground truth) 104. A gradient of the loss may be further computed, for example, using an optimization function, with respect to the weights of the nodes 102, during the backward pass. The weights may be adjusted based on the computed gradients for minimizing the loss.

Several iterations of the forward and backward passes may be made during the training of the ML model, generating large amounts of data that may need to be processed and stored. The model data (also referred to as a model state) may be represented using data structures such as tensors. Accordingly, the model data generated during training of an ML model will hereinafter be referred to as tensors or tensor data, although the present embodiments are not limited to tensors.

Not all tensors may be actively used at a given time during the training process. For example, a tensor storing model parameters of one of the nodes (e.g., node 102b) may be actively used for a computation, while a tensor storing model parameters for another one of the nodes (e.g., node 102c) may be inactive.

Other types of model data, such as, for example, activations, training datasets, model checkpoints, and/or the like, may also be used for model training, but not as frequently as the model parameters. For example, a model checkpoint may represent the state of the model (e.g., provide a model snapshot) at a particular point in time. The model checkpoint may be needed in the event of a disruption in the model training process (e.g., power outage), to allow model training to resume using the model checkpoint data once the disruption disappears.

It may be desirable to identify the various tensors generated for training the ML model, and offload the tensors that are not used for a current operation (hereinafter referred to as "inactive tensors"), from a task processor handling the computations, to a first device, such as a device with low latency, high bandwidth, and the like (e.g., a host CPU). Some of the generated tensors may be tensors (e.g., activations, checkpoints, etc.) that are not commonly used for performing computations. It may be desirable to offload those tensors to a second device, such as a device with a higher latency (e.g., an SSD). The offloading of the data may free up computing resources in the task processor, allowing adjustment to an aspect of the training of the ML model. For example, the input batch size may be increased.

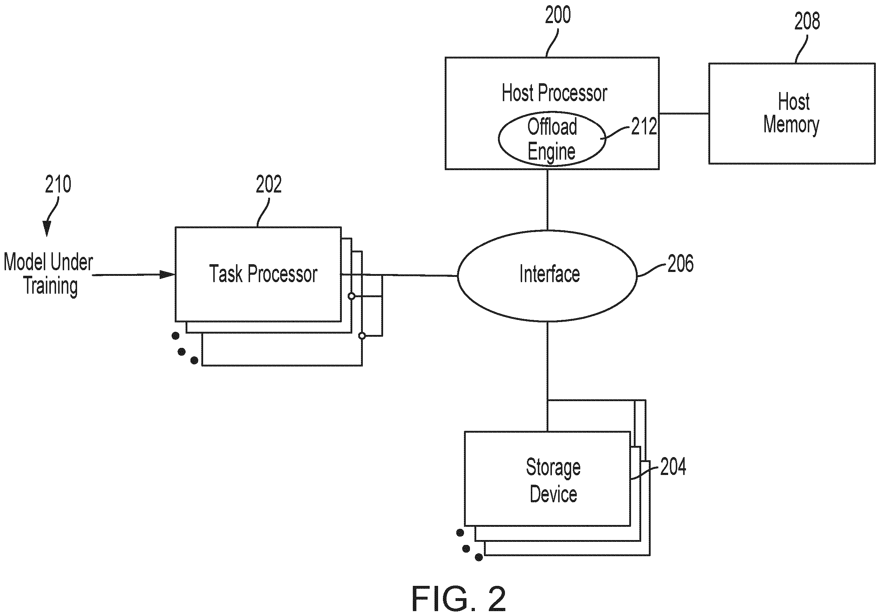

FIG. 2 depicts a block diagram of a computing system for building an ML model based on workloads of an AI pipeline according to one or more embodiments. In some embodiments, the computing system includes a host processor 200 in communication with one or more task processors 202 and one or more storage devices 204 over an interface 206. Hereinafter, the host processor 200, task processor 202, and storage device 204 will simply be referred to as "devices."

In some embodiments, the interface 206 connects the task processor 202 and storage device 204 to the host processor 200 to allow the host processor to access the different types of memory in the task processor 202 and the storage device 204, coherently, as part of the host's memory space. In some embodiments, the interface 206 includes a Compute Express Link (CXL) switch configured with one or more CXL protocols (e.g., CXL.io, CXL.mem, and/or CXL.cache), although embodiments are not limited thereto. For example, in some embodiments, the interface 206 (e.g., the connector and the protocol thereof) may include (or may conform to) a Cache Coherent Interconnect for Accelerators (CCIX), dual in-line memory module (DIMM) interface, Small Computer System Interface (SCSI), Non Volatile Memory Express (NVMe), Peripheral Component Interconnect Express (PCIe), remote direct memory access (RDMA) over Ethernet, Serial Advanced Technology Attachment (SATA), Fiber Channel, Serial Attached SCSI (SAS), NVMe over Fabric (NVMe-oF), iWARP protocol, InfiniBand protocol, 5G wireless protocol, Wi-Fi protocol, Bluetooth protocol, and/or the like. In various embodiments, the interface 206 (e.g., the connector and the protocol thereof) includes various general-purpose interfaces such as, for example, Ethernet, Universal Serial Bus (USB), and/or the like.

The host processor 200 may be a processing circuit, for example, such as a general purpose processor or a central processing unit (CPU) core of a host computing device coupled to a host memory 208. The host memory 208 may be considered as high performing main memory (e.g., primary memory) of the host device. For example, in some embodiments, the host memory 208 may include (or may be) volatile memory, for example, such as dynamic random-access memory (DRAM). However, the present disclosure is not limited thereto, and the host memory 208 may include (or may be) any suitable high performing main memory (e.g., primary memory) replacement for the host device as would be known to those skilled in the art. For example, in other embodiments, the host memory 208 may be a relatively high performing non-volatile memory, such as NAND flash memory, Phase Change Memory (PCM), Resistive RAM, Spin-transfer Torque RAM (STTRAM), any suitable memory based on PCM technology, memristor technology, and/or resistive random access memory (ReRAM), and can include, for example, chalcogenides, and/or the like.

In some embodiments, the task processor 202 includes a GPU, although embodiments are not limited thereto. For example, the task processor 202 may also take the form of a tensor processing unit, co-processor, or any other processing device configured to efficiently handle a task.

The storage device 204 may be a secondary memory device such as, for example, an SSD. In some embodiments, the storage device 204 is implemented as a computational storage device (for example, an SSD with an embedded processor or Field Programmable Gate Array (FPGA)). However, the present disclosure is not limited thereto, and in other embodiments, the storage device 204 may include (or may be) any suitable storage device, such as, for example, a magnetic storage device (e.g., a hard disk drive (HDD), and the like), an optical storage device (e.g., a Blue-ray disc drive, a compact disc (CD) drive, a digital versatile disc (DVD) drive, and the like), other kinds of flash memory devices (e.g., a USB flash drive, and the like), and/or the like. In various embodiments, the storage device 204 may conform to a large form factor standard (e.g., a 3.5 inch hard drive form-factor), a small form factor standard (e.g., a 2.5 inch hard drive form-factor), an M.2 form factor, an E1.S form factor, and/or the like. In other embodiments, the storage device 204 may conform to any suitable or desired derivative of these form factors.

In some embodiments, the host processor 200 manages an AI pipeline including one or more tasks that are to be executed for building an ML model 210. For example, the host processor 200 may transmit commands to one or more of the task processors 202 for executing one or more tasks of the AI pipeline, and/or one or more computations associated with a task. For example, the host processor 200 may transmit a command to the task processor 202 for training the ML model 210 based on an input batch of training samples. The one or more task processors 202 may execute the commanded tasks and/or computations, in series or in parallel. For example, the training batch may be split across two or more of the task processors 202 for training the ML model in parallel.

In some embodiments, the host processor 200 includes an offload engine 212 configured to monitor the operations or computations (collectively referenced as computations) associated with a task. For example, for an ML training task, the offload engine 212 may monitor computations associated with the nodes 102 of the ML model 210, the stage of the computations (e.g., forward or backward pass), and/or profiles of the tensors associated with the computations. The offload engine 212 may orchestrate transfer or offloading of the ML data (e.g., tensors) to one or more of the devices 202, 204, via the interface 206. The offload engine 212 may also detect the offloading one or more inactive tensors from the task processor 202, to the host processor 200.

For example, the task processor 202 may offload inactive ML data (e.g., inactive tensors) to the host memory 208. In some embodiments, the task processor identifies inactive tensors for offloading. In some embodiments, the offload engine 212 identifies the inactive tensors. Whether a tensor is identified as inactive may depend on one or more attributes of the tensor. Such attributes may be stored in a tensor profile, and may include, for example, an access pattern of the tensor (e.g., memory blocks accessed by the tensor), a timestamp associated with the tensor (e.g., last time the tensor was used relative to the start of the training interval), and/or the like. The task processor 202 and/or offload engine 212 may examine one or more of the attributes and offload a tensor to the host processor 200 based on the one or more of the attributes. For example, the task processor 202 and/or offload engine 212 may offload a tensor if at least a threshold amount of time has passed since the last access of the tensor, based on the tensor timestamp.

In some embodiments, the transfer of the tensor by the task processor 202 is via an offload (or store) command. The offload command may identify, for example, the tensor (e.g., tensor ID) to be offloaded, and a destination of the offload. In some embodiments, the destination of the offload may be a memory location in the host memory 208. The transfer may be achieved, for example, via a direct memory access of the host memory 208 using the interface 206.

The offload engine 212 may monitor the location of the tensors (e.g., the device storing the tensors) and the state (e.g., progress) of the computing logic (e.g., computing operations) for the ML model training. The offload engine 212 may determine that a tensor needed for an upcoming computing operation has been offloaded to the host memory 208, and provide the tensor to the task processor 202 for performing the computation. For example, the offload engine 212 may perform a write of the tensor into the memory of the task processor 202 (e.g., via a store command).

In some embodiments, the host processor 200 keeps some of the offloaded tensor data in the host memory 208, while further offloading some of the other tensor data to the storage device 204. The selection of the tensor data that stays in the host memory 208 and the tensor data that is offloaded to the storage device 204 may depend, for example, on the data type of the ML data. For example, certain model parameters such as optimizer states, gradients, and model weights commonly used for performing computations during forward or backward pass of the training operation, may be kept in the host memory 208. Other model data such as activations, input batches, and checkpoints that may not be frequently accessed (if at all), during the model training, may offloaded to the storage device 204.

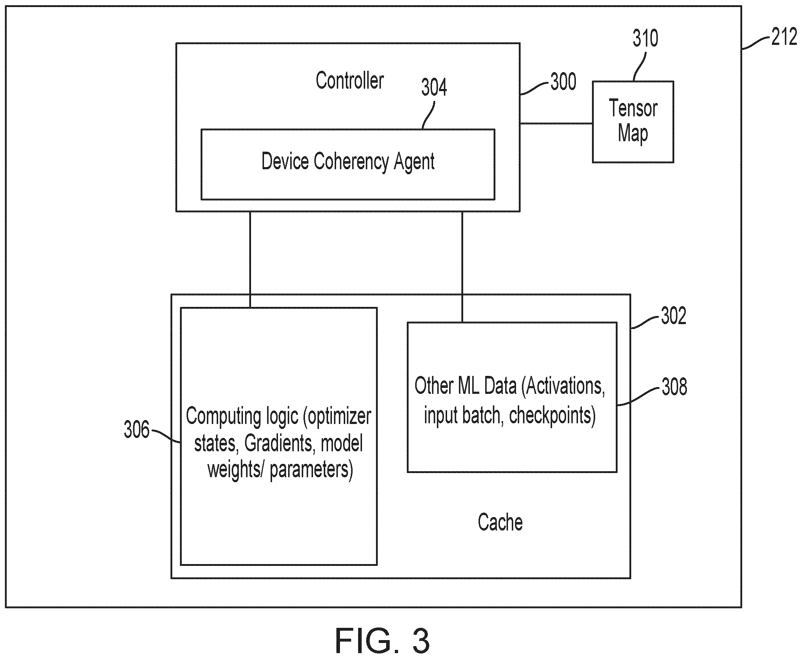

FIG. 3 depicts a block diagram of the offload engine 212 according to one or more embodiments. The offload engine 212 may include a controller 300 coupled to a cache 302. In some embodiments, the controller 300 takes the form of a CXL controller that adheres to the CXL.mem, CXL.io, and/or CXL.cache protocols.

The controller 300 may include at least one processing component embedded thereon, such as, for example, an ARM processor, a graphics processing unit (GPU), a field programmable gate array (FPGA), and/or another digital circuit (e.g., a microcontroller, a microprocessor, a digital signal processor, or a logic device (e.g., an application-specific integrated circuit (ASIC)). The processing component may help achieve the functionalities described herein. In this regard, in some embodiments, the controller 300 is configured to gather information of the devices 200, 202, 204 in the heterogeneous memory system. For example, the controller 300 may gather capacity and bandwidth information of the devices.

In some embodiments, the controller 300 monitors the computing logic of an AI pipeline task, and orchestrates the transfer and/or sharing of data from one device to another (e.g., between the host memory 208, task processor 202, and/or storage device 204), in a coherent manner. In some embodiments, the CXL controller 300 includes a device coherency agent 304 for ensuring coherency of the cache 302 with other caches in the heterogeneous memory system. In some embodiments, a similar device coherency agent resides in the task processor 202, and/or storage device 204 for ensuring coherency of their internal cache.

In some embodiments, the cache 302 stores at least some of the ML data used by the AI pipeline task. For an ML training task, the cache 302 may store the computing logic and associated data (hereinafter referred to as computation tensors) 306. The cache may also store all or some of the other ML data 308 that may be infrequently accessed, if at all, after the start of the training (e.g., activations, input batch, and /or checkpoints). In some embodiments, the cache is flushed after the data is offloaded to the task processor 202, host memory 208, and/or storage device 204. The ML data 308 may also be stored in tensors.

The computation tensors 306 and the other ML data 308 may have different attributes associated with them (e.g., in a tensor profile). The attributes may include, for example, a tensor identifier (ID), access timestamp (relative to the time at which an iteration begins), tensor access pattern (e.g., memory blocks accessed by the tensor), tensor access interval (e.g., start and end memory addresses in the device that was accessed), and/or the like. In some embodiments, the tensor profile further indicates a data type of the tensor. The data type may indicate whether the tensor is one of a computation tensor 306 (e.g., optimizer state, gradient, model weight, or another computation parameter), or other non-computation related ML data 308 (e.g., activation, input batch, checkpoint data, etc.). The tensor profile may accompany the tensor as the tensor is moved from one device to another. In some embodiments, the tensor profile is part of the tensor data.

The tensor profile may be used by the offload engine 212 and/or task processor 202 in determining whether a tensor should be offloaded or not, and to which device. For example, the controller 300 may monitor the computing logic and provide a computation tensor 306 (e.g., weight tensor) stored in the cache 302, to one or more task processors 202 (e.g., into the memory of the one or more task processors) for performing a computation during the ML training. In some embodiments, the other ML data 308 stored in the cache 302 that may not be needed (or needed as often) for performing a computation during the training process, may be offloaded to the storage device 204.

In some embodiments, the cache 302 further stores a tensor map 310. The tensor map 310 may identify for one or more tensor IDs, an identifier of a device (e.g., host processor 200, task processor 202, or storage device 204) currently storing the tensor, and/or the like. In some embodiments, the tensor map 310 stores a data type of the tensor (e.g., computation tensor or other ML data tensor). The tensor map 310 may allow identification of a computation tensor that may be needed for a computation, that is stored in the cache 302 or the host memory 208, to be moved to the memory of the task processor 202 to perform the computation. The movement may be via a write command issued by the controller 300. The target address of the write command may be an address of the task processor 202 that is to perform the computation. The writing of the data may be, for example, via a direct memory access of the target address using the interface 206.

The tensor map 310 may also allow identification of the other ML data that may not be needed for a computation, be moved to the storage device 204. This may allow the freeing up of the host memory 208, which may in turn allow data that may not be needed by the task processor 202 to perform a current computation, to be offloaded to the host memory 208 (e.g., via the host processor 200). The freeing up of memory in the task processor 202 may help accelerate training and help improve throughput. In this regard, the task processor 202 may transmit a signal indicative of a state (e.g., available memory) of the task processor 202. Based on the signal, the host processor 200 may update a parameter associated with the ML training task. For example, the input batch size of the input training data may be increased. The increase of the input batch size my reduce the number of iterations needed for training the ML model, and help accelerate the time it takes to train the ML model.

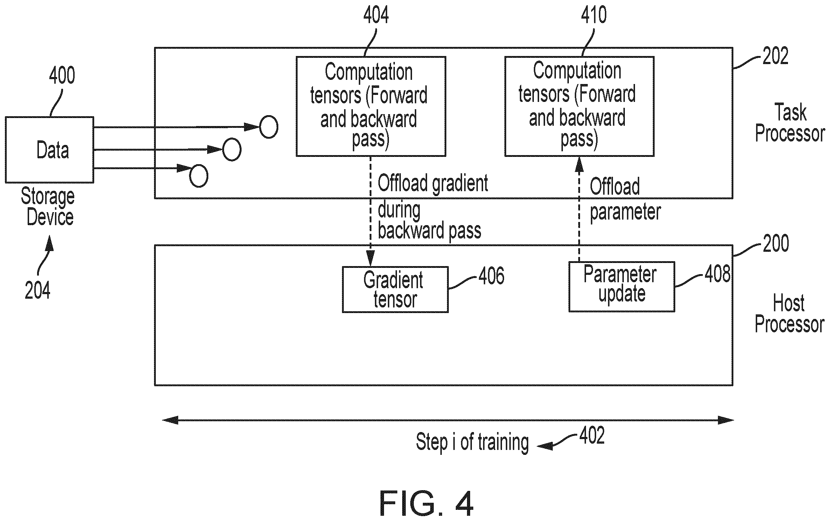

FIG. 4 depicts a process for moving computation tensors between the host processor 200 and the task processor 202 according to one or more embodiments. During start of the training process, ML data 400 (e.g., input training batch) stored in the storage device 204 is provided to one or more task processors 202 for performing one or more computations. For example, the ML data 400 may be loaded to the cache 302 of the host processor 200, and then provided to the task processor 202 (e.g., in a cache coherent manner). The computations performed by a task processor 202 may include, for example, computing weights, activations, and gradients of one or more nodes 102 during an iteration (e.g., step i) 402 of the training (e.g., the ith forward and backward pass). One or more computation tensors of a first state 404 may be generated during the ith iteration 402 of the training. The computation tensors may be similar to the computation tensors 306 of FIG. 3. The computation tensors may be updated during the ith iteration of the training based on updated model parameters, to generate computations tensors of a second state 410.

In some embodiments, one or more of the computation tensors may be offloaded by the task processor 202 to the host processor 200. For example, one or more gradient tensors 406 may be offloaded to the host processor 200 during a backward pass of the training. For example, the gradient tensor 406 may be offloaded by the task processor 202 once the gradient tensor 406 has been computed. The offloaded gradient tensors 406 may be stored, for example, in the cache 302 or host memory 208. In some embodiments, the tensor map is updated for indicating that the gradient tensors 406 are stored in the host memory 108.

In some embodiments, the task processor 202 may perform adjustments of one or more model parameters (e.g., weights) of the one or more nodes 102 based on the computed gradient. The updated parameter tensors 408 may also be offloaded to the host processor 200 and stored in the cache 302 and/or the host memory 208. The updated parameter tensors 408 may include one or more of the computation tensors 306 of FIG. 3.

In some embodiments, the controller 300 determines, based on monitoring the computing logic, that an updated parameter tensor 408 is to be used for generating the computation tensors of the second state 410. The controller 300 may transfer the updated parameter tensor 408 to the task processor 202 based on the determination.

Although not depicted in FIG. 4, it should be appreciated that the task processor 202 and/or host processor 200 may utilize and/or store other ML data 308 such as activations, checkpoints, and/or the like. In some embodiments, the controller 300 offloads such other ML data 308 to the storage device 204.

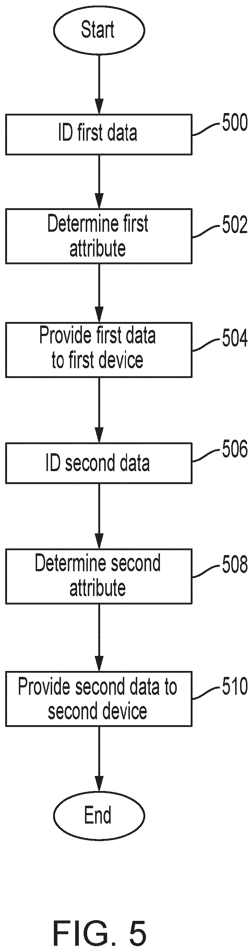

FIG. 5 depicts a flow diagram of a process for moving tensor data by the host processor 200 according to one or more embodiments. The process may be executed, for example, by the offload engine 212 during an iteration of model training.

The process starts, and in act 500, the offload engine 212 identifies first data associated with a task associated with (e.g., for building) an ML model. The task, may be, for example, an ML training operation. The first data may be, for example, a computation tensor 306 stored in the cache 302 or the host memory 208. The built ML model may be used for generating predictions based on received inputs.

In act 502, the offload engine 212 determines a first attribute associated with the first data. The first attribute may include a state of the computing logic for training the ML model. The state of the computing logic may identify a next computation to be executed for the training of the ML model that may need the first data for performing the computation. The computation may be a computation during a forward or backward pass of the training.

In act 504, the first data is provided to a first device based on determining the first attribute. The first device may be the task processor 202. The transfer of the data may entail transmitting a store command to the task processor 202. The task processor 202 may perform a computation using the first data. The computation may generate additional data (e.g., third data), that may be kept at the task processor 202 or offloaded to the host processor 200 for freeing up memory of the task processor.

In act 506, the offload engine 212 identifies second data associated with the task associated with (e.g., for building) the ML model. The second data may be, for example, one of the other ML data 308 stored in the cache 302 or the host memory 208, that may not be needed (or not often needed) for performing a computation.

In act 508, the offload engine 212 determines a second attribute associated with the second data. The second attribute may include a data type. The data type may be at least one of an activation data, input data, checkpoint data, and/or the like.

In act 510, the offload engine 212 provides the second data to a second device different form the first device. For example, the second device may be the data storage device 204.

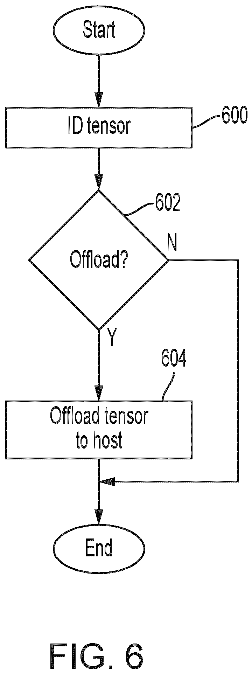

FIG. 6 depicts a flow diagram of a process for moving tensor data by the task processor 202 according to one or more embodiments. The process may be executed, for example, during an iteration of model training.

The process starts, and in act 600, the task processor 202 identifies a tensor. The identified tensor may be one accessed by the task processor 202 during a computation, one generated by the task processor as a result of a computation, and/or the like.

In act 602, the task processor 202 determines whether to offload the tensor to the host processor 200. In this regard, the task processor 202 (or offload engine 212) may examine one or more attributes of the tensor (e.g., stored in a tensor profile) for determining whether the tensor can be deemed to be inactive. The attributes that are examined may include, for example, an access pattern of the tensor (e.g., memory blocks accessed by the tensor), a timestamp associated with the tensor (e.g., last time the tensor was used relative to the start of the training interval), and/or the like. For example, the task processor 202 (or offload engine 212) may determine that the tensor is inactive, and therefore should be offloaded, if at least a threshold amount of time has passed since the last access of the tensor, based on the tensor timestamp.

In another example, the offload decision can be made based on a dynamic tensor access pattern (e.g., random, sequential, vectorized, etc.) that is tracked during runtime. For example, if the tensor access pattern during training iterations is regular, one or more of the tensors may be offloaded to optimize performance of the underlying hardware architecture. For example, some tensors may be offloaded to the GPU/task processors 202 for optimizing the GPU for parallel computation, and some tensors may be offloaded to the CPU/ host processor 200 for optimizing the CPU for single-threaded performance. In some embodiments, the task processor 202 (or offload engine 212) further considers available memory and other computing resources for determining whether to offload the tensor.

If the tensor is not to be offloaded, the tensor is kept in the memory of the task processor 202.

One or more embodiments of the present disclosure may be implemented in one or more processors (also referred to as processing circuit). The term processor may refer to one or more processors and/or one or more processing cores. The one or more processors may be hosted in a single device or distributed over multiple devices (e.g. over a cloud system). A processor may include, for example, application specific integrated circuits (ASICs), general purpose or special purpose central processing units (CPUs), digital signal processors (DSPs), graphics processing units (GPUs), and programmable logic devices such as field programmable gate arrays (FPGAs). In a processor, as used herein, each function is performed either by hardware configured, i.e., hard-wired, to perform that function, or by more general-purpose hardware, such as a CPU, configured to execute instructions stored in a non-transitory storage medium (e.g. memory). A processor may be fabricated on a single printed circuit board (PCB) or distributed over several interconnected PCBs. A processor may contain other processing circuits; for example, a processing circuit may include two processing circuits, an FPGA and a CPU, interconnected on a PCB.

It will be understood that, although the terms "first", "second", "third", etc., may be used herein to describe various elements, components, regions, layers and/or sections, these elements, components, regions, layers and/or sections should not be limited by these terms. These terms are only used to distinguish one element, component, region, layer or section from another element, component, region, layer or section. Thus, a first element, component, region, layer or section discussed herein could be termed a second element, component, region, layer or section.

The terminology used herein is for the purpose of describing particular embodiments only and is not intended to be limiting of the inventive concept. Also, unless explicitly stated, the embodiments described herein are not mutually exclusive. Aspects of the embodiments described herein may be combined in some implementations.

As used herein, the singular forms "a" and "an" are intended to include the plural forms as well, unless the context clearly indicates otherwise. It will be further understood that the terms "comprises" and/or "comprising", when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Expressions such as "at least one of," when preceding a list of elements, modify the entire list of elements and do not modify the individual elements of the list. Further, the use of "may" when describing embodiments of the inventive concept refers to "one or more embodiments of the present disclosure". Also, the term "exemplary" is intended to refer to an example or illustration. As used herein, the terms "use," "using," and "used" may be considered synonymous with the terms "utilize," "utilizing," and "utilized," respectively.

Although exemplary embodiments of systems and methods for processing a task of an AI pipeline have been specifically described and illustrated herein, many modifications and variations will be apparent to those skilled in the art. Accordingly, it is to be understood that systems and methods for processing a task of an AI pipeline constructed according to principles of this disclosure may be embodied other than as specifically described herein. The disclosure is also defined in the following claims, and equivalents thereof.

The systems and methods for processing storage transactions may contain one or more combination of features set forth in the below statements.

Statement 1. A system comprising: a first storage medium; and a processing circuit in communication with the first storage medium, the processing circuit being configured to: identify first data associated with a task associated with a machine learning program; determine a first attribute associated with the first data; provide the first data to a first device based on determining the first attribute; identify second data associated with the task associated with the machine learning program; determine a second attribute associated with the second data; and provide the second data to a second device different from the first device, wherein the machine learning program is configured to generate a result based on an input.

Statement 2. The system of Statement 1, wherein the first device includes at least one of a graphics processing unit, tensor processing unit, or co-processor.

Statement 3. The system of Statement 2, wherein the second device includes a solid state drive.

Statement 4. The system of Statement 1, wherein the processing circuit is configured to operate using a cache coherent protocol.

Statement 5. The system of Statement 1, wherein the first data is stored in the first storage medium and includes at least one of an optimizer state, gradient, or weight computed for the machine learning program.

Statement 6. The system of Statement 1, wherein the second data is stored in the first storage medium and includes at least one of an activation, input batch, or checkpoint data of the machine learning program.

Statement 7. The system of Statement 1, wherein the first attribute includes a state of a computing logic for training the machine learning program.

Statement 8. The system of Statement 1, wherein the second attribute includes a data type.

Statement 9. The system of Statement 1, wherein the first device is configured to perform a computation based on the first data, generate third data based on the computation, and transfer the third data, wherein the processing circuit is configured to: receive the third data; and store the third data in the first storage medium.

Statement 10. The system of Statement 1, wherein the processing circuit is further configured to: receive a signal indicative of a state of the first device; and update a parameter associated with the task.

Statement 11. The system of Statement 10, wherein the state of the first device includes available memory of the first device, and the parameter includes a batch size of training data for training the machine learning program.

Statement 12. A method comprising: identifying first data associated with a task associated with a machine learning program; determining a first attribute associated with the first data; providing the first data to a first device based on determining the first attribute; identifying second data associated with the task associated with the machine learning program; determining a second attribute associated with the second data; and providing the second data to a second device different from the first device, wherein the machine learning program is configured to generate a result based on an input.

Statement 13. The method of Statement 12, wherein the first device includes at least one of a graphics processing unit, tensor processing unit, or co-processor.

Statement 14. The method of Statement 13, wherein the second device includes a solid state drive.

Statement 15. The method of Statement 12, wherein the first data is stored in a storage medium and includes at least one of an optimizer state, gradient, or weight computed for the machine learning program.

Statement 16. The method of Statement 12, wherein the second data is stored in a storage medium and includes at least one of an activation, input batch, or checkpoint data of the machine learning program.

Statement 17. The method of Statement 12, wherein the first attribute includes a state of a computing logic for training the machine learning program.

Statement 18. The method of Statement 12, wherein the second attribute includes a data type.

Statement 19. The method of Statement 12, wherein the first device performs a computation based on the first data, generates third data based on the computation, and transfers the third data, wherein the method further includes: receiving the third data; and storing the third data in a storage medium.

Statement 20. The method of Statement 12 further comprising: receiving a signal indicative of a state of the first device; and updating a parameter associated with the task.

## Claims

1. A system comprising:
a first storage medium; and
a processing circuit in communication with the first storage medium, the processing circuit being configured to:
identify first data associated with a task associated with a machine learning program;
determine a first attribute associated with the first data;
provide the first data to a first device based on determining the first attribute;
identify second data associated with the task associated with the machine learning program;
determine a second attribute associated with the second data; and
provide the second data to a second device different from the first device, wherein the machine learning program is configured to generate a result based on an input.

2. The system of claim 1, wherein the first device includes at least one of a graphics processing unit, tensor processing unit, or co-processor.

3. The system of claim 1 or 2, wherein the second device includes a solid state drive.

4. The system of any one of claims 1 to 3, wherein the processing circuit is configured to operate using a cache coherent protocol.

5. The system of any one of claims 1 to 4, wherein the first data is stored in the first storage medium and includes at least one of an optimizer state, gradient, or weight computed for the machine learning program.

6. The system of any one of claims 1 to 5, wherein the second data is stored in the first storage medium and includes at least one of an activation, input batch, or checkpoint data of the machine learning program.

7. The system of any one of claims 1 to 6, wherein the first attribute includes a state of a computing logic for training the machine learning program.

8. The system of any one of claims 1 to 7, wherein the second attribute includes a data type.

9. The system of any one of claims 1 to 8, wherein the first device is configured to perform a computation based on the first data, generate third data based on the computation, and transfer the third data, wherein the processing circuit is configured to:
receive the third data; and
store the third data in the first storage medium.

10. The system of any one of claims 1 to 9, wherein the processing circuit is further configured to:
receive a signal indicative of a state of the first device; and
update a parameter associated with the task.

11. The system of claim 10, wherein the state of the first device includes available memory of the first device, and the parameter includes a batch size of training data for training the machine learning program.

12. A method comprising:
identifying first data associated with a task associated with a machine learning program;
determining a first attribute associated with the first data;
providing the first data to a first device based on determining the first attribute;
identifying second data associated with the task associated with the machine learning program;
determining a second attribute associated with the second data; and
providing the second data to a second device different from the first device, wherein the machine learning program is configured to generate a result based on an input.

13. The method of claim 12, wherein the first device includes at least one of a graphics processing unit, tensor processing unit, or co-processor.

14. The method of claim 12 or 13, wherein the second device includes a solid state drive.

15. The method of any one of claims 12 to 14, wherein the first data is stored in a storage medium and includes at least one of an optimizer state, gradient, or weight computed for the machine learning program.
